# EUROPÄISCHE PATENTSCHRIFT

(11) **EP 1 002 751 B1**
(45) Veröffentlichungstag und Bekanntmachung des Hinweises auf die Patenterteilung: **16.04.2003**
(21) Anmeldenummer: 99121861.1
(22) Anmeldetag: 04.11.1999
(51) Int. Cl.: B65H 9/00, B65G 61/00, B65G 43/08, B65H 31/00

(54) **Vorrichtung zum Ausrichten von Stapelträgern im Anleger bzw. Ausleger von bogenverbeitenden Druckmaschinen**
Device for positioning stack carriers in the feeding or delivery device of a sheet printing machine
Dispositif pour le positionnement de supports de piles dans le margeur ou le dispositif de sortie d'une machine à imprimer des feuilles

(30) Priorität: 18.11.1998 DE 29820661 U
(43) Veröffentlichungstag der Anmeldung: 24.05.2000
(73) Patentinhaber: MAN Roland Druckmaschinen AG, 63075 Offenbach (DE)
(72) Erfinder: Benz, Martin, 63755 Alzenau (DE)
(74) Vertreter: Stahl, Dietmar

(56) Entgegenhaltungen:
- EP-A- 0 470 362
- EP-A- 0 896 945
- DE-A- 4 138 488
- US-A- 4 565 129

## Beschreibung

Die Erfindung betrifft eine Vorrichtung zum Ausrichten von Stapelträgern im Anleger bzw. Ausleger von bogenverarbeitenden Druckmaschinen gemäß dem Oberbegriff von Anspruch 1.

### [Stand der Technik]

Bogenverarbeitende Druckmaschinen und insbesondere Bogenoffsetdruckmaschinen werden im Anleger und/oder Ausleger zunehmend mit Systemen zum automatischen Stapelwechsel ausgerüstet. Durch diese Vorrichtungen ist es möglich, während des Druckbetriebes im Anleger einen neuen Bogenstapel bereitzustellen und diesen mit dem von einem Hilfsstapelträger gehaltenen Reststapel zu vereinigen. Im Ausleger werden Bogenaufnahmevorrichtungen eingefahren, woraufhin der auf dem Stapelträger befindliche Bogenstapel entnommen und durch einen leeren Stapelträger ersetzt werden kann. Die in der Zwischenzeit auf den Bogenaufnahmeeinrichtungen abgelegten Bogen werden danach auf den leeren Stapelträger (Palette) abgelegt.

Eine weitere Automatisierung solcher Stapelwechselvorrichtungen bringt die Anbindung eines Logistiksystems zum Zu- und Abfördern von Stapelträgern bzw. Stapeln. Diese Transporteinrichtungen bestehen aus angetriebenen Transportrollen, vermittels denen die Stapelträger bzw. die Stapelträger nebst Stapel in den Ausleger bzw. Anleger herein- und herausgefördert werden. Demzufolge weisen die Stapeltragplatten Transportrollen auf bzw. sind derartig ausgebildet, um die auf den Transportrollen befindlichen Stapelträger von den Transportrollen abzunehmen. Eine Einrichtung zum automatischen Stapelwechsel im Ausleger einer Druckmaschine mit integrierter Transportvorrichtung ist beispielsweise aus der DE 41 38 488 C2 bzw. der DE 296 04 280 U1 bekannt.

Beim Einfahren eines leeren Stapelträgers in den Ausleger bzw. eines Bogenstapels auf einem Stapelträger in den Anleger muß durch das Transportsystem eine Ausrichtung des Stapels bzw. des Stapelträgers bzgl. Maschinenmitte erfolgen. Dies setzt aber Kenntnis der Größe bzw. des Formates des Stapelträgers (Palette) voraus. Demzufolge werden beim Stand der Technik einheitliches Format aufweisende Stapelträger verwendet. Eine Berücksichtigung unterschiedlicher Formate von Stapelträgern / Stapeln würde einen zusätzlichen Datenaustausch zwischen Druckmaschine und dem vor- bzw. nachgeschalteten Transportsystem erforderlich machen.

### [Aufgabe der Erfindung]

Aufgabe der vorliegenden Erfindung ist es daher eine Vorrichtung gemäß dem Oberbegriff von Anspruch 1 derartig zu erweitern, so daß mit einfachen Mitteln eine automatische Ausrichtung des Stapels (Anleger) bzw. des Stapelträgers (Ausleger) bezogen auf die Maschinenmitte durchgeführt werden kann.

Gelöst wird diese Aufgabe durch die kennzeichnenden Merkmale von Anspruch 1. Weiterbildungen der Erfindung ergeben sich aus den Unteransprüchen.

Gemäß der Erfindung sind Sensormittel vorgesehen, vermittels denen während des Einfahrens des Stapels bzw. Stapelträgers in den Anleger bzw. Ausleger die Größe des Stapels bzw. des Stapelträgers wiedergebende Signale generiert werden. Mit dem Transportsystem ist ein Signalgeber verbunden, dem entsprechend dem ausgeübten Transportweg Signale entnehmbar sind. Die Signale der Sensormittel und des Signalgebers werden einer Auswertevorrichtung zugeführt, durch welche die Größe des Stapels bzw. Stapelträgers und der zur Ausrichtung nötige Verfahrweg bestimmt wird.

Bei Ausbildung des Transportsystems als motorisch angetriebene Transportrollen ist der Signalgeber vorzugsweise ein Drehgeber, der mit dem Antrieb der Transportrollen im Bereich der Stapeltragplatte bzw. der Tragvorrichtung für den Stapelträger verbunden ist. Gemäß einer bevorzugten Ausführungsform der Erfindung bestehen die Sensormittel aus zwei in einem bekannten Abstand zueinander angeordneten Sensoren in Form von Lichtschranken bzw. Abstandstastern (z.B. Ultraschall). Durch den bezogen auf die Transportrichtung des Stapelträgers bzw. des Stapels zweiten Sensor erfolgt ein Auslösen des Meßvorganges, wobei dazu die Signale des Gebers der Transportvorrichtung (Drehgeber am Antrieb der Transportrollen) ausgewertet werden. Der in Förderrichtung des Transportsystems erste Sensor beendet den Meßvorgang (Zählvorgang Impulse) bei Passieren der Stapelkante bzw. Kante des Stapelträgers.

Der zuvorstehend geschilderte Meßvorgang besteht aus einem durch die Signale der Sensoren getriggerten Zählvorgang von Impulsen des Signalgebers. Ist das Transportsystem als motorisch angetriebene Transportrollen und der Signalgeber als Drehgeber ausgebildet, so kann wegen des vorgegebenen Umfangs der Transportrollen eine bestimmte Anzahl von Impulsen (Drehgeber) in eine bestimmte Wegstrecke umgerechnet werden. Mit anderen Worten bedeutet dies, daß die Impulse des Drehgebers ein Maß für die vom Stapelträger / Stapel auf den Transportrollen zurückgelegte Wegstrecke sind.

Wie bereits zuvorstehend erwähnt kann es sich bei den Sensoren um Reflexlichttaster, ultra-akustische Näherungsschalter oder sonstige mit Berührung bzw. berührungslose Schaltvorrichtungen handeln. Wesentlich ist, daß den in bekannten Abstand zueinander angeordneten Sensoren beim Passieren der Vorderkante des Stapelträgers bzw. Stapels sowie durch das Passieren der entsprechend nachlaufenden Kante je ein Signal zum Starten bzw. Beenden des Meßvorganges entnehmbar sind.

Die Verwendung von zwei Sensoren hat dabei den Vorteil, daß sich dadurch eine Minimierung einer möglichen Fehlmessung beim Übergang von einer zur anderen Förderkomponente ergibt. Durch das Rutschen (Schlupf) des Stapelträgers auf den Transportrollen ergibt sich u. U. ein größerer zurückgelegter Weg, als dies durch die Signale des Drehgebers (Signalgebers) ermittelbar ist.

Gemäß der zuvorstehend geschilderten bevorzugten Ausführungsform der Erfindung ist vorgesehen, zwei in Förderrichtung des Stapelträgers des Stapels im bekannten Abstand zueinander angeordnete Sensoren zu verwenden. Der die vorlaufende Kante des Stapelträgers bzw. des Stapels tastende Sensor kann vorzugsweise in der Maschinenmitte angeordnet sein. Der in Transportrichtung des Stapelträgers bzw. des Stapels diesem Sensor (Maschinenmitte) vorgeordnete zweite Sensor weist vorzugsweise einen Abstand zu diesem auf, welcher größer ist als die Hälfte der Breite der in der Maschine zu verwendenden Stapelträger (Palette) bzw. des Bedruckstofformates. Dadurch ergibt sich auf jeden Fall eine Bestimmung der Größe des Stapelträgers / Stapels (Bogenformat) während des Hineinförderns in die Maschine, wobei zum anschließenden Positionieren (Fahren des Stapelträgers / Stapels um einen Restweg in Maschinenmitte) keine Bewegungsumkehr erfolgen muß.

### [Beispiele]

Des weiteren erfolgt die Erläuterung einer Ausführungsform der Erfindung anhand der Zeichnungen. Es zeigt:
- Fig. 1: die Erfindung im Bereich eines Anlegers bzw. Auslegers und
- Fig. 2: das Meßprinzip in einer prinzipiellen Ansicht von oben gemäß Figur 1.

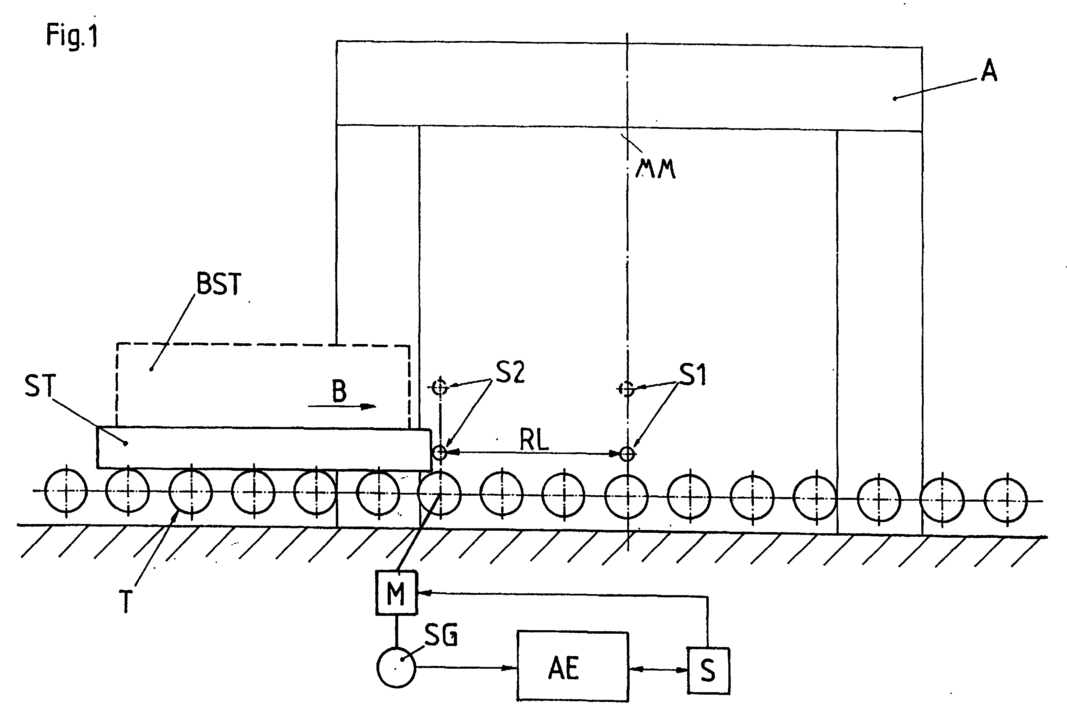

Im Bereich des Anlegers / Auslegers A einer nicht weiter dargestellten bogenverarbeitenden Maschine (Druckmaschine) ist quer zur Förderrichtung der Bogen verlaufend eine Transportvorrichtung T angeordnet. Diese besteht, wie beispielsweise in Figur 1 dargestellt, aus nebeneinanderliegenden und antreibbaren Rollen. Das Transportsystem T bzw. die Rollen des Transportsystems T weisen einen Antrieb M auf, dem ein beispielsweise als Drehgeber (Inkrementalgeber, Absolutgeber) ausgebildeter Signalgeber SG zugeordnet ist. Die Signale des Signalgebers SG werden einer nachgeschalteten Auswertevorrichtung AE zugeführt, die mit einer Steuerung S des Antriebes M des Transportsystems T in Signalverbindung steht.

Auf den Rollen des Transportsystems T können in der in Figur 1 dargestellten Weise Stapelträger ST in den Anleger / Ausleger A eingefördert werden (Bewegungsrichtung B). Handelt es sich um ein Transportsystem T im Bereich des Auslegers einer bogenverarbeitenden Druckmaschine, so werden auf den Rollen des Transportsystems T leere Stapelträger ST hereingefördert, um danach in der noch geschilderten Weise relativ zur Maschinenmitte MM ausgerichtet zu werden. Im Falle eines Anlegers wird auf den Rollen des Transportsystems T ein auf einem Stapelträger ST befindlicher Bogenstapel BST ebenfalls zur Maschinenmitte MM ausgerichtet bereitgestellt. Nach dem Ausrichten des Stapelträgers ST bzw. des Bogenstapels BST auf dem Stapelträger ST relativ zur Maschinenmitte MM erfolgt ein Anheben des Stapelträgers ST durch in der Figur 1 nicht dargestellte und an sich bekannte Hubvorrichtungen.

Mit der Auswertevorrichtung AE des Signalgebers SG sind Sensoren S1, S2 verbunden, wobei der erste Sensor S1 in der Maschinenmitte MM angeordnet ist. Der zweite Sensor S2 ist eine bekannte Wegstrecke RL in Bewegungsrichtung B des Stapelträgers ST bzw. Bogenstapels BST dem Sensor S1 vorgeordnet. Vorzugsweise ist der Abstand RL derartig gewählt, daß dieser größer ist als die Hälfte der Breite eines größstmöglich zu verarbeitenden Stapelträgers ST bzw. Bogenstapels BST.

Handelt es sich um einen Anleger A, so werden die Sensoren S1, S2 vorzugsweise in einer derartigen Höhe angebracht, so daß durch diese die vor- und die nachlaufende Kante eines auf dem Stapelträger ST befindlichen Bogenstapel BST tastbar sind. In Figur 1 ist der Bogenstapel BST sowie die Position der Sensoren S1, S2 gestrichelt dargestellt. Handelt es sich um einen Ausleger A, so werden üblicherweise leere Stapelträger ST durch das Transportsystem T eingefahren. Demzufolge sind die Sensoren S1, S2 in einer Höhe angebracht, so daß durch diese die vor- und die nachlaufende Kante des in Richtung B bewegten Stapelträgers ST tastbar sind.

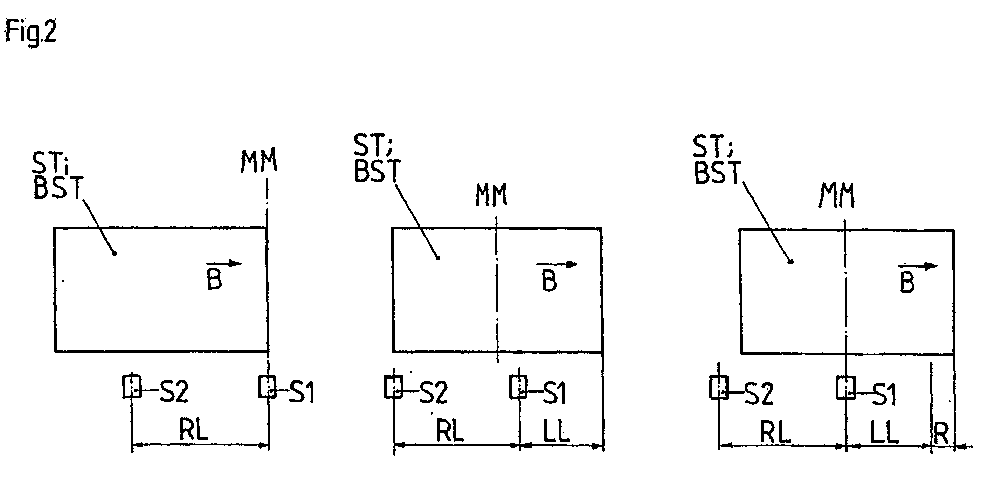

Wie noch anhand der Darstellungen in Figur 2 erläutert werden wird, erfolgt durch die Sensoren S1, S2 in Verbindung mit den Signalen des Signalgebers SG seitens der Auswertevorrichtung AE eine Bestimmung der Förderstrecke LL, wobei diese Strecke LL dadurch bestimmt wird, daß durch die vorauslaufende Kante des Stapelträgers ST bzw. des Bogenstapels BST der Sensor S1 geschaltet und durch die nachlaufende Kante des Stapelträgers ST bzw. des Bogenstapels BST der Sensor S2 geschaltet wird. Die Situation des Schaltens von Sensor S1 durch die vorauslaufende Kante des Stapelträgers ST bzw. Bogenstapels BST zeigt dabei die linke in Figur 2 wiedergegebene Darstellung. In der Mitte von Figur 2 ist die Situation dargestellt, wenn die nachlaufende Kante des Stapelträgers ST bzw. Bogenstapels BST durch den Sensor S2 getastet wird. Die vorlaufende Kante des Stapelträgers ST bzw. Bogenstapels BST hat dann die Lauflänge LL zurückgelegt. Das Transportsystem T (Förderrollen) hat dabei über den Antrieb M den Stapelträger ST bzw. den darauf befindlichen Bogenstapel BST um die Strecke LL fortbewegt. Diese Förderstrecke (Lauflänge) LL ist durch das Auswerten der Signale des Signalgebers SG durch die Auswertevorrichtung AE ermittelbar.

Da der Abstand RL der Sensoren S1, S2 in Förderrichtung B bekannt ist, so ergibt sich die Länge (Format) PL des Stapelträgers ST bzw. des Bogenstapels BST als PL = RL+LL. LL ergibt sich aus der Auswertung der vom Signalgeber SG gelieferten Impulse innerhalb des durch die Schaltzeitpunkte der Sensoren S1 und S2 definierten Zeitfensters. Dabei entspricht beispielsweise ein Impuls des Signalgebers SG einer bestimmten Bewegungstrecke. Die Auswertevorrichtung AE enthält einen entsprechenden Umrechnungsfaktor zum Bestimmen der Lauflänge LL aus der Anzahl der jeweilig ermittelten Zählimpulse des Signalgebers SG.

Um den Stapelträger ST bzw. den Bogenstapel BST bezüglich der Maschinenmitte MM auszurichten (siehe Figur 2, rechts), muß der Stapelträger ST bzw. der Stapelstapel BST, ausgehend von der Position wie in der Mitte von Figur 2 gezeigt, noch um die verbleibende Wegstrecke R bewegt werden. Dieser Restweg R ergibt sich dabei zu: R = PL/2 - LL. Dieser Restweg R wird durch die Auswertevorrichtung AE berechnet und in Verbindung mit einem vorgelagerten Verzögerungszeitpunkt zum Herunterfahren des Antriebes M der Steuerung S zugeführt.

In dem zuvor erläuterten Ausführungsbeispiel ist der Sensor S1 in der Maschinenmitte MM angeordnet. Ohne Beschränkung der Allgemeinheit der Erfindung kann der Sensor S1 auch außermittig angeordnet sein, wobei dann dieser Abstand zwischen Sensor S1 und der Maschinenmitte MM zur Positionierung des Stapelträgers ST bzw. des Bogenstapels BST durch die Auswerteeinheit AE mit berücksichtigt wird (Berechnung Restweg R).

### [Bezugszeichenliste]

- A: Anleger / Ausleger
- T: Transportsystem (Rollen)
- M: Antrieb (Transportsystem T)
- S: Steuerung
- AE: Auswertevorrichtung
- SG: Signalgeber
- S1: Sensor
- S2: Sensor
- B: Bewegungsrichtung
- ST: Stapelträger
- BST: Bogenstapel
- MM: Maschinenmitte (Anleger / Ausleger A)
- RL: Abstand Sensor S1 - Sensor S2
- LL: Lauflänge (Stapelträger ST / Bogenstapel BST innerhalb der Schaltzeitpunkte der Sensoren S1, S2)
- R: Restweg

## Patentansprüche

1. Vorrichtung zum Ausrichten von Stapeln (BST) bzw. Stapelträgern (ST) im Ausleger / Anleger (A) von bogenverarbeitenden Druckmaschinen, insbesondere Bogenoffsetdruckmaschinen, mit einem senkrecht zur Förderrichtung der zu verarbeitenden Bogen verlaufendem Transportsystem (T), durch welches ein Stapelträger / Stapel in den Anleger / Ausleger einfahrbar und bezüglich der Maschinenmitte ausrichtbar ist,
**dadurch gekennzeichnet,**
**daß** im vom Stapelträger (ST) bzw. Bogenstapel (BST) auf dem Transportsystem (T) befahrenen Bereich Sensormittel (S1, S2) angeordnet sind, daß dem Antrieb (M) des Transportsystems (T) ein Signalgeber (SG) zugeordnet ist, und daß die Signale der Sensormittel (S1, S2) sowie des Signalgebers (SG) einer Auswertevorrichtung (AE) zuführbar sind, wobei durch die Auswertevorrichtung (AE) aus den Signalen der Sensormittel (S1, S2) und des Signalgebers (SG) die auf die Bewegungsrichtung (B) bezogene Größe des Stapelträgers (ST) bzw. Bogenstapels (BST) und der zur maschinenmittigen Ausrichtung nötige Verfahrweg bestimmbar ist.

2. Vorrichtung nach Anspruch 1,
**dadurch gekennzeichnet,**
**daß** bezogen auf die Bewegungsrichtung (B) des Stapelträgers (ST) bzw. Bogenstapels (BST) zwei Sensoren (S1, S2) angeordnet sind, die einen vorgegebenen Abstand (RL) zueinander aufweisen.

3. Vorrichtung nach Anspruch 2,
**dadurch gekennzeichnet,**
**daß** durch einen Sensor (S1) die vorlaufende Kante des Stapelträgers (ST) bzw. des Bogenstapels (BST) tastbar und durch den zweiten Sensor (S2) die nachlaufende Kante des Stapelträgers (ST) bzw. des Bogenstapels (BST) tastbar ist.

4. Vorrichtung nach einem der vorhergehenden Ansprüche,
**dadurch gekennzeichnet,**
**daß** die Sensoren (S1, S2) als berührungslos tastende Schaltmittel ausgebildet sind.

5. Vorrichtung nach einem der vorhergehenden Ansprüche,
**dadurch gekennzeichnet,**
**daß** in einem Ausleger (A) die Sensoren (S1, S2) in einer derartigen Höhe angebracht sind, so daß durch diese die Kanten eines Stapelträgers (ST) tastbar sind.

6. Vorrichtung nach einem der Ansprüche 1 bis 4,
**dadurch gekennzeichnet,**
**daß** in einem Anleger (A) die Sensoren (S1, S2) in einer derartigen Höhe angebracht sind, so daß durch diese die Kanten eines Bogenstapels (BST) tastbar sind.

## Claims

1. Device for aligning piles (BST) or pile carriers (ST) in the delivery/feeder (A) of sheet-treating printing presses, particularly offset sheet printing presses, with a transport system (T) running perpendicular to the feed direction of the sheets to be processed, by means of which a pile carrier/pile can be moved into the feeder/delivery and can be aligned with respect to the press centre, **characterised in that** sensor means (S1, S2) are arranged in the region moved through by the pile carrier (ST) or sheet pile (BST) on the transport system (2), that a signal emitter (SG) is fitted to the drive (M) of the transport system (T) and that the signals of the sensor means (S1, S2) as well as of the signal emitter (SG) can be fed to an evaluation device (AE), wherein by the evaluation device (AE) from the signals of the sensor means (S1, S2) and of the signal emitter (SG) the size of the pile carrier (ST) or of the sheet pile (BST) taken with respect to the direction of movement (B) can be determined and the necessary movement path for press central alignment.

2. Device according to Claim 1, **characterised in that** taken in the direction of movement (B) of the pile carrier (ST) or sheet pile (BST), two sensors (S1, S2) are arranged which have a preset distance (RL) relative to one another.

3. Device according to Claim 2, **characterised in that** by a sensor (S1), the leading edge of the pile carrier (ST) or sheet pile (BST) can be sensed and by the second sensor (S2) the trailing edge of the pile carrier (ST) or of the sheet pile (BST) can be sensed.

4. Device according to one of the preceding Claims, **characterised in that** the sensors (S1, S2) are constructed as contactless sensing switching means.

5. Device according to one of the preceding Claims, **characterised in that** in a delivery (A), the sensors (S1, S2) are fitted at such a height so that the edges of a pile carrier (ST) can be sensed by these.

6. Device according to one of Claims 1 to 4, **characterised in that** in a feeder (A), the sensors (S1, S2) are fitted at such a height so that the edges of sheet pile (BST) can be sensed by these.

## Revendications

1. Dispositif pour positionner des piles (BST) ou des supports de pile (ST) dans la sortie ou le margeur (A) de machines d'impression traitant des feuilles, en particulier des machines d'impression offset à feuilles, comportant un système de transport (T) s'étendant perpendiculairement à la direction de transport des feuilles à traiter, grâce auquel une pile ou un support de pile peut être introduit dans le margeur ou la sortie et être positionné relativement au centre de la machine,
**caractérisé en ce que**, dans la zone parcourue par le support de pile (ST) ou la pile de feuilles (BST) sur le système de transport (T), sont agencés des moyens capteurs (S1, S2), **en ce qu'**un transmetteur de signaux (SG) est associé à l'entraînement (M) du système de transport (T), et **en ce que** les signaux des moyens capteurs (S1, S2) ainsi que du transmetteur de signaux (SG) peuvent être amenés à un dispositif d'exploitation (AE), la taille, relativement à la direction de déplacement (B), du support de pile (ST) ou de la pile de feuilles (BST) et le déplacement nécessaire pour le positionnement au centre de la machine pouvant être déterminés par le dispositif d'exploitation (AE) à partir des signaux des moyens capteurs (S1, S2) et du transmetteur de signaux (SG).

2. Dispositif selon la revendication 1,
**caractérisé en ce que**, relativement à la direction de déplacement (B) du support de pile (ST) ou de la pile de feuilles (BST), deux capteurs (S1, S2) sont agencés qui présentent une distance prédéfinie (RL) l'un par rapport à l'autre.

3. Dispositif selon la revendication 2,
**caractérisé en ce que**, par un capteur (S1), le bord avant du support de pile (ST) ou de la pile de feuilles (BST) peut être détecté et, par le second capteur (S2), le bord arrière du support de pile (ST) ou de la pile de feuilles (BST) peut être détecté.

4. Dispositif selon une des revendications précédentes,
**caractérisé en ce que** les capteurs (S1, S2) sont réalisés comme moyens de commutation à détection sans contact.

5. Dispositif selon une des revendications précédentes,
**caractérisé en ce que**, dans une sortie (A), les capteurs (S1, S2) sont agencés à une hauteur telle que les bords d'un support de pile (ST) peuvent être détectés par ceux-ci.

6. Dispositif selon une des revendications 1 à 4,
**caractérisé en ce que**, dans un margeur (A), les capteurs (S1, S2) sont agencés à une hauteur telle que les bords d'une pile de feuilles (BST) peuvent être détectés par ceux-ci.
